# EUROPEAN PATENT APPLICATION

(11) **EP 4 579 999 A1**
(43) Date of publication of application: **02.07.2025**
(21) Application number: 24188607.6
(22) Date of filing: 15.07.2024
(51) Int. Cl.: H02J 11/00, B60L 58/10, B60L 58/20

(54) **BACKUP POWER SUPPLY FOR A BMS CONTROLLER**

(30) Priority: 26.12.2023 KR 20230191326
(71) Applicant: SAMSUNG SDI CO., LTD., Giheung-gu Yongin-si, Gyeonggi-do 17084 (KR)
(72) Inventor: Yoo, Kwang Min, 16678 Suwon-si, Gyeonggi-do (KR); Koo, Kyo Song, 16678 Suwon-si, Gyeonggi-do (KR); Kurcik, Peter, 16678 Suwon-si, Gyeonggi-do (KR); Flatscher, Matthias, 16678 Suwon-si, Gyeonggi-do (KR)
(74) Representative: Gulde & Partner

(57) **Abstract**

A power maintenance apparatus is disclosed. The power maintenance apparatus includes: a power conversion part (200) configured for converting voltage from a battery pack (P) into operating voltage required for operation of a controller (40) adapted to manage the battery pack (P) and supplying the operating voltage to the controller (40); and a processor (100) configured for controlling the power conversion part (200) by monitoring voltage supplied from a vehicle terminal to the controller (40). The power maintenance apparatus can ensure uninterrupted power supply to the controller (40) even when supply of power from a low-voltage terminal to the controller (40) is cut off, thereby allowing the controller (40) to maintain control over the battery pack (P).

## Description

### BACKGROUND

### 1. Field

Aspects of embodiments of the present disclosure relate to a power maintenance apparatus.

### 2. Description of the Related Art

A battery management system (BMS) monitors the state of a battery. The BMS can protect a battery pack by controlling a main relay and the like based on information about the state of battery cells in the battery pack.

The battery pack may have a structure according to two electrical characteristics: low voltage (LV from 12 V/24 V Pb battery) and high voltage (HV from battery pack voltage). The BMS is disposed at a low-voltage terminal of the battery pack.

When low voltage is input from a vehicle terminal, power is supplied to a micro controller unit (MCU) of the BMS through a separate ignition circuit.

However, if the low voltage from the vehicle terminal drops momentarily, the MCU will not operate.

As a result, normal functions of the MCU, such as storage, processing, and determination, are shut down, which can endanger vehicle safety related to a vehicle's battery pack.

This section provides background information related to the present invention which is not necessarily prior art.

### SUMMARY

It is an aspect of the present invention to provide a power maintenance apparatus that can ensure uninterrupted power supply to a controller even when power supply from a low-voltage terminal to the controller is cut off.

The above and other aspects and features of the present invention will become apparent from the following description of embodiments of the present invention.

In accordance with an aspect of the present invention, a power maintenance apparatus includes: a power conversion part converting voltage from a battery pack into operating voltage required for operation of a controller adapted to manage the battery pack and applying (e.g., supplying) the operating voltage to the controller; and a processor controlling the power conversion part by monitoring voltage supplied from a vehicle terminal to the controller.

In an embodiment, the power conversion part may be an isolated DC/DC converter.

In an embodiment, the power conversion part may comprise at least one selected from among a full-bridge converter, a half-bridge converter, an LLC converter, a flyback converter, and a push-pull converter.

In an embodiment, the power conversion part may convert voltage from the entire battery pack into the operating voltage.

In an embodiment, the power conversion part may convert voltage from at least one battery cell in the battery pack into the operating voltage.

In an embodiment, the power conversion part may convert voltage from at least one battery module in the battery pack into the operating voltage.

In an embodiment, the processor may control the power conversion part based on results of comparison between the voltage supplied from the vehicle terminal to the controller and a predetermined threshold voltage.

In an embodiment, the threshold voltage may be set to a value less than the operating voltage.

In accordance with an aspect of the present invention, a power maintenance apparatus includes: a backup power supply part charged with voltage supplied from a vehicle terminal and supplying the charged voltage to a controller managing a battery pack as operating voltage; and a processor controlling the backup power supply part by monitoring voltage supplied from the vehicle terminal to the controller.

In an embodiment, the backup power supply part may be a non-isolated DC/DC converter.

In an embodiment, the backup power supply part may be a buck-boost converter.

In an embodiment, the backup power supply part may be operated in buck mode or boost mode depending on a magnitude of the operating voltage relative to the voltage supplied from the vehicle terminal.

In an embodiment, the processor may control the backup power supply part based on results of comparison between the voltage supplied from the vehicle terminal to the controller and a predetermined threshold voltage.

In an embodiment, the threshold voltage may be set to a value less than the operating voltage.

In an embodiment, the power maintenance apparatus may further include: a power supply switching part selectively supplying the operating voltage from the backup power supply part to the controller.

In an embodiment, the power supply switching part may include a three-pole switch, the three-pole switch may have a first terminal connected to the controller, a second terminal delivering voltage from the vehicle terminal, and a third terminal connected to the backup power supply part, and, depending on the voltage supplied from the vehicle terminal to the controller, the first terminal may be connected to the second terminal to supply voltage from the vehicle terminal to the controller, or may be connected to the third terminal to supply the operating voltage from the backup power supply part to the controller.

The present invention provides a power maintenance apparatus that can ensure uninterrupted power supply to a controller even when power supply from a low-voltage terminal to the controller is cut off.

However, aspects and features of the present invention are not limited to those described above and other aspects and features not mentioned will be clearly understood by those skilled in the art from the detailed description given below.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a diagram of a power maintenance apparatus according to a first embodiment of the present invention;
FIG. 2 is a diagram of a battery cell provided to a power conversion part according to the first embodiment;
FIG. 3 is a diagram of a battery module provided to the power conversion part according to the first embodiment;
FIG. 4 is a diagram of a battery pack provided to the power conversion part according to the first embodiment;
FIG. 5 is a diagram of the power conversion part according to the first embodiment;
FIG. 6 is a diagram of a power maintenance apparatus according to a second embodiment of the invention; and
FIG. 7 is a diagram of a backup power supply part according to the second embodiment.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

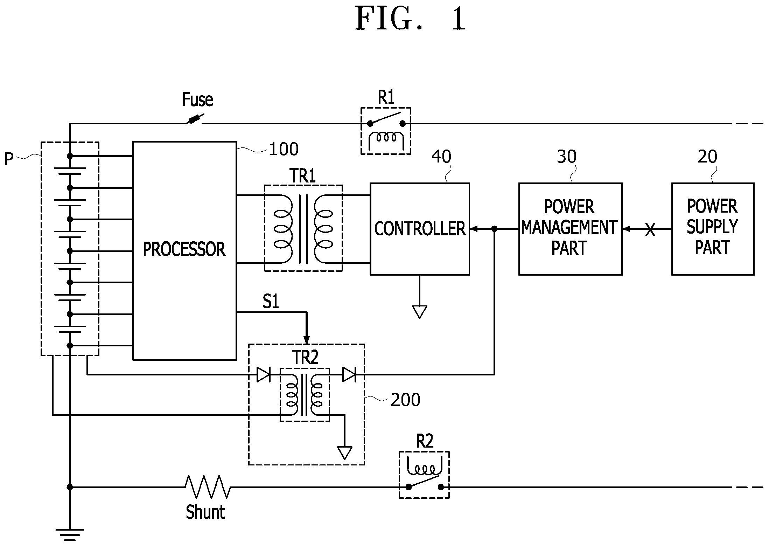

FIG. 1 is a diagram of a power maintenance apparatus according to a first embodiment of the present invention.

Referring to FIG. 1, the power maintenance apparatus according to the first embodiment may include a processor 100 and a power conversion part 200.

The processor 100 may control the power conversion part 200 by monitoring voltage applied from a vehicle terminal to a controller 40.

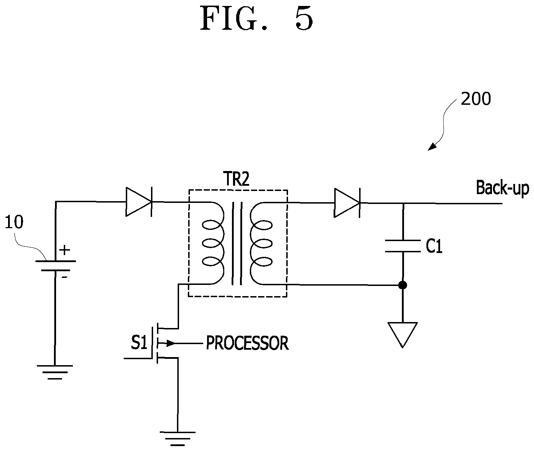

The controller 40 may be an MCU of a battery management system (BMS) that monitors the state of a battery (e.g., a battery 10 in FIG. 5) and manages the battery. However, the type of controller 40 is not particularly restricted.

The voltage supplied from the vehicle terminal to the controller 40 may be low voltage. In general, a battery pack P may be divided into a low-voltage terminal (e.g., LV from 12 V/24 V Pb battery) and a high-voltage terminal (e.g., HV from battery pack voltage). The BMS may be disposed at the low-voltage terminal. The low-voltage terminal may be a built-in battery (e.g., a Pb battery) having a voltage of 12 V to 48 V.

Referring to FIG. 1, a power supply part 20 at the vehicle terminal may supply a voltage of 4.5 V to 50 V. The power supply part 20 may be a built-in battery having a voltage of 12 V to 48V.

The power management part 30 may convert the voltage supplied from the power supply part 20 into operating voltage required for operation of the controller 40.

The operating voltage may range from 3.3 V to 5 V. Thus, the power management part 30 may convert a voltage of 4.5 V to 50 V supplied from the vehicle terminal into an operating voltage of 3.3 V to 5 V required for operation of the controller 40.

The controller 40 may be operated at the operating voltage supplied from the power management part 30. The controller 40 may control a first relay R1 or a second relay R2 depending on the voltage of the battery 10 to cut off or permit power to/from the battery 10.

The controller 40 may supply power to the processor 100 through a first transformer TR1.

The first transformer TR1 may be connected at a primary side thereof to the controller 40 and may be connected at a secondary side thereof to the processor 100.

The first transformer TR1 may convert power supplied from the controller 40 and may supply the converted power to the processor 100.

Based on the voltage supplied from the first transformer TR1, the processor 100 may determine whether power is normally supplied from the vehicle terminal to the controller 40. If the operating voltage is not supplied to the controller 40, a normal voltage is not applied to the processor 100 through the first transformer TR1. Based thereon, the processor 100 may determine whether power is normally supplied to the controller 40.

The processor 100 may compare the voltage supplied from the first transformer TR1 with a predetermined threshold voltage.

The threshold voltage may be a reference voltage for determination of whether the voltage supplied to the controller 40 is an abnormal voltage. The threshold voltage may be set to a value less than the operating voltage of the controller 40.

If the voltage supplied to the controller 40 is less than the threshold voltage, the controller 40 may be in a blackout state or in a state of being unable to perform normal operation.

The processor 100 may determine whether a normal voltage is supplied from the vehicle terminal to the controller 40 based on results of comparison between the voltage supplied from the first transformer TR1 and the threshold voltage.

If the voltage supplied from the first transformer TR1 is greater than the threshold voltage, the processor 100 may determine that a normal voltage is supplied from the vehicle terminal to the controller 40.

If the voltage supplied from the first transformer TR1 is less than the threshold voltage, the processor 100 may determine that an abnormal voltage is supplied from the vehicle terminal to the controller 40.

When a determination is made that an abnormal voltage is supplied from the vehicle terminal to the controller 40, the processor 100 may perform, for example, pulse-width modulation (PWM) control on the power conversion part 200 to supply voltage from the battery pack P (or a module or individual battery 10 thereof) to the controller 40.

The power conversion part 200 may convert the voltage from the battery 10 into operating voltage and may apply the operating voltage to the controller 40. That is, when voltage is not normally supplied from the vehicle terminal to the controller 40, the power conversion part 200 may convert voltage from the battery pack P into operating voltage and may supply the operating voltage to the controller 40. In this way, the controller 40 can operate normally even when voltage is not normally supplied from the vehicle terminal to the controller 40. With the operating voltage supplied from the battery pack P to the controller 40, the controller 40 may check battery cell voltage, determine the state of the first relay R1 and the second relay R2 to determine whether to turn the relays on or off, or may store data upon shutdown of the BMS.

The voltage supplied through the power conversion part 200 may be a voltage of the entire battery pack P, a voltage of at least one battery module M, or a voltage of at least one battery cell C.

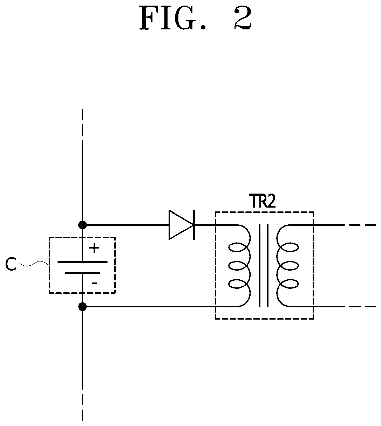

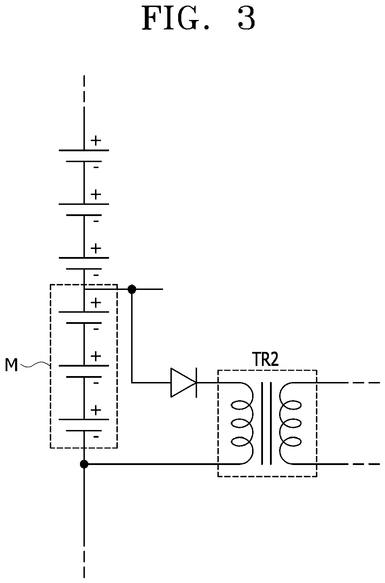

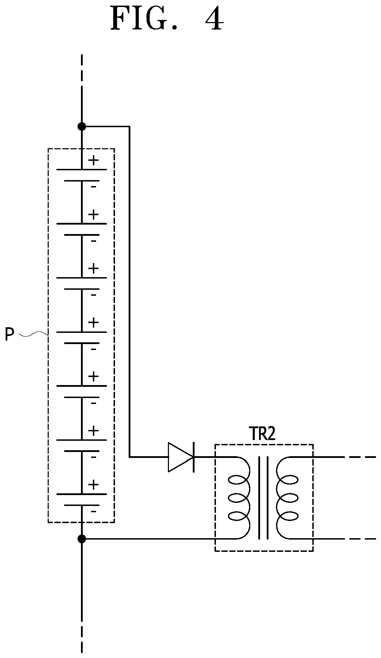

FIG. 2 is a diagram of a battery cell provided to the power conversion part according to the first embodiment, FIG. 3 is a diagram of a battery module supplied to the power conversion part according to the first embodiment, and FIG. 4 is a diagram of a battery pack provided to the power conversion part according to the first embodiment.

The battery pack P may include one or more battery modules M and a pack housing formed therein with a receiving space for receiving the one or more battery modules M.

The battery module M may include a plurality of battery cells C and a module housing. The battery module M may include a plurality of battery cells C connected in series or parallel to each other. The one or more battery modules M may be connected in series or parallel to each other.

The plurality of battery cells C may be stacked one above another and may be received in the module housing.

The battery cell C may include positive and negative leads. The battery cell C may be a cylindrical, prismatic, or pouch battery cell depending on the shape of the battery.

Referring to FIG. 2, the battery cell C may be connected at both ends thereof to the primary side of the transformer TR2 of the power conversion part 200 such that voltage from the battery cell C is supplied to the primary side of the transformer TR2.

Referring to FIG. 3, the battery module M may be connected at both ends thereof to the primary side of the transformer TR2 of the power conversion part 200 such that voltage from the battery module M may be supplied to the primary side of the transformer TR2.

Referring to FIG. 4, the battery pack P may be connected at both ends thereof to the primary side of the transformer TR2 of the power conversion part 200 such that voltage from the entire battery pack P may be supplied to the primary side of the transformer TR2.

The power conversion part 200 may convert the voltage from the battery 10 into operating voltage required for operation of the controller 40 managing the battery 10 and may supply the operating voltage to the controller 40.

The power conversion part 200 may be an isolated DC/DC converter.

The power conversion part 200 may be a full-bridge converter, a half-bridge converter, an LLC converter, a flyback converter, or a push-pull converter.

However, the type or structure of the power conversion part 200 and the type of power conversion carried out by the power conversion part 200 are not particularly restricted.

FIG. 5 is a diagram of a power conversion part according to the first embodiment.

FIG. 5 shows an example in which an isolated DC/DC converter is employed as the power conversion part 200.

A transformer TR2 of the power conversion part 200 may be connected at a primary side thereof to the battery 10 (or battery module M or battery pack P) and may be connected at a secondary side thereof to an input terminal of the controller 40.

The transformer TR2 may be provided at the primary side thereof with a switch S1.

The switch S1 may be switched by a PWM control signal from the processor 100 to control the flow of current through the primary side of the transformer TR2.

The processor 100 may control the flow of current through the primary side of the transformer TR2 by performing PWM control on the switch S1 as described above. Accordingly, a voltage is formed at the secondary side of the transformer TR2. Here, the secondary side voltage may be rectified or filtered and then a capacitor C1 may be charged thereby.

The capacitor C1 may be connected to the input terminal of the controller 40.

The voltage charged in the capacitor C1 may be input as operating voltage to the controller 40 through the input terminal of the controller 40.

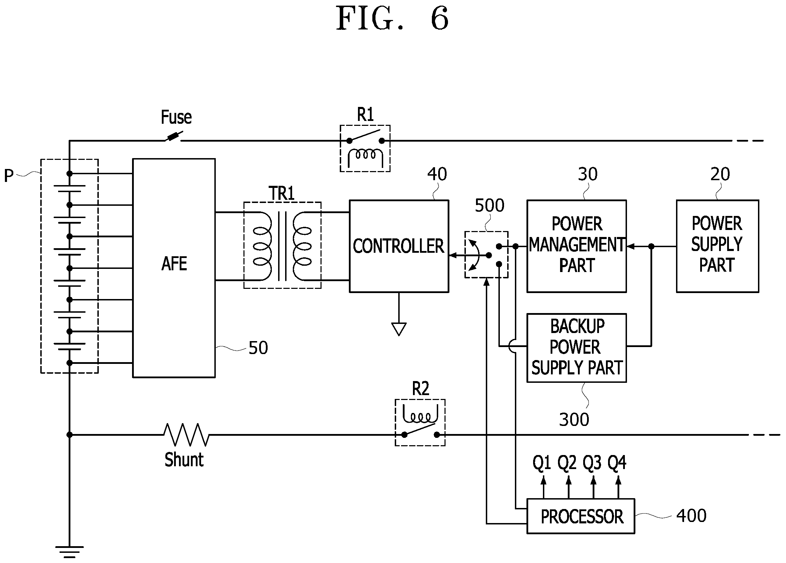

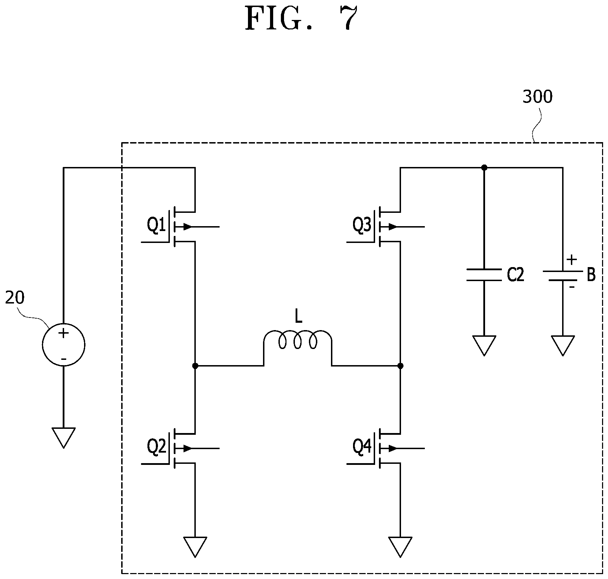

In the first embodiment of the present invention, voltage from the battery pack P may be converted into operating voltage and supplied to the controller 40. However, the present invention is not limited thereto and voltage supplied from the vehicle terminal may be used as operating voltage of the controller 40. This will be described in detail with reference to FIG. 6 and FIG. 7.

In a second embodiment of the present invention, components identical to those in the first embodiment are denoted by the same reference numerals and detailed description thereof will be omitted.

FIG. 6 is a diagram of a power maintenance apparatus according to the second embodiment of the present invention, and FIG. 7 is a diagram of a backup power supply part according to the second embodiment of the present invention.

Referring to FIG. 6, the power maintenance apparatus according to the second embodiment may include a backup power supply part 300, a processor 400, and a power supply switching part 500.

The backup power supply part 300 may be charged with voltage supplied from the vehicle terminal and may supply the charged voltage to the controller 40 as operating voltage.

The backup power supply part 300 may be a non-isolated DC/DC converter.

The backup power supply part 300 may be a buck-boost converter.

The backup power supply part 300 may be operated in buck mode or boost mode depending on the magnitude of the operating voltage relative to the voltage supplied from the vehicle terminal.

The voltage supplied from the vehicle terminal may range from 4.5 V to 50 V. In order to convert the voltage supplied from the vehicle terminal into the operating voltage required for operation of the controller 40, the backup power supply part 300 may be operated in buck mode or boost mode. For example, when the operating voltage of the controller 40 is 3.3 V or 5 V, the backup power supply part 300 may be operated in buck mode to convert the voltage supplied from the vehicle terminal into the operating voltage.

The voltage charged in the backup power supply part 300 may be 6 V. However, the voltage charged in the backup power supply part 300 is not particularly restricted and may be changed as needed.

In FIG. 6, reference numeral 50 is an analog front end (AFE) 50 that monitors the voltage, current, and temperature of the battery.

FIG. 7 shows an example in which a non-isolated buck-boost DC/DC converter is used as the backup power supply part 300.

The backup power supply part 300 may include first to fourth switches Q1 to Q4, an inductor L, and a charging part C2 or B.

The first switch Q1 and the second switch Q2 may be connected in series, and the third switch Q3 and the fourth switch Q4 may be connected in series. The first to fourth switches Q1 to Q4 may be switched depending on the operational mode of the backup power supply part 300.

When the backup power supply part 300 is operated in buck mode, the first switch Q1 and the second switch Q2 may be switched complementarily, the third switch Q3 may be turned on, and the fourth switch Q4 may be turned off.

When the backup power supply part 300 is operated in boost mode, the third switch Q3 and the fourth switch Q4 may be switched complementarily, the first switch Q1 may be turned on, and the second switch Q2 may be turned off.

The inductor L may be connected at one side thereof to a node between the first switch Q1 and the second switch Q2 and may be connected at the other side thereof to a node between the third switch Q3 and the fourth switch Q4. The inductor L may store energy as the first to fourth switches Q1 to Q4 are switched as described above, and may supply the stored energy to the charging part C2 or B.

The charging part C2 or B may be charged with the energy supplied from the inductor L and may supply the charged energy to the controller 40. The charging part C2 or B may be a capacitor C capable of temporarily storing energy or a battery B having a relatively small capacity.

The power supply switching part 500 may selectively supply the controller 40 with the operating voltage supplied from the backup power supply part 300.

The power supply switching part 500 may be a three-pole switch. The three-pole switch may have a first terminal connected as a common terminal to the controller 40, a second terminal connected to the power management part 30, and a third terminal connected to the backup power supply part 300.

Depending on whether a normal voltage is being supplied to the controller 40, the first terminal may be connected to one of the second terminal and the third terminal.

When a normal voltage is supplied to the controller 40, the first terminal may be connected to the second terminal according to a control signal from the processor 400. Accordingly, the voltage supplied from the vehicle terminal may be supplied to the controller 40 through the power management part 30.

When an abnormal voltage is supplied to the controller 40, the first terminal may be connected to the third terminal according to a control signal from the processor 400. Accordingly, the voltage charged in the backup power supply part 300 may be supplied as the operating voltage to the controller 40.

The processor 400 may control the backup power supply part 300 by monitoring voltage input from the vehicle to the controller 40.

The processor 400 may control the backup power supply part 300 based on results of comparison between the voltage applied from the vehicle terminal to the controller 40 and a predetermined threshold voltage.

When the voltage applied from the vehicle terminal to the controller 40 is less than the threshold voltage, the processor 400 may cause the backup power supply part 300 to operate in buck mode or boost mode depending on the magnitude of the operating voltage relative to the voltage supplied from the vehicle terminal.

When the backup power supply part 300 is operated in buck mode, the processor 400 may charge the charging part C2 or B by complementarily switching the first switch Q1 and the second switch Q2, turning the third switch Q3 on, and turning the fourth switch Q4 off.

When the backup power supply part 300 is operated in boost mode, the processor 400 charges the charging part C2 or B by complementarily switching the third switch Q3 and the fourth switch Q4, turning the first switch Q1 on, and turning the second switch Q2 off.

The processor 400 may connect the controller 40 to the backup power supply part 300 by controlling the power supply switching part 500. Accordingly, the operating voltage charged in the backup power supply part 300 may be supplied to the controller 40 through the power supply switching part 500.

In the first and second embodiments of the present invention, the processor may be connected to a memory (not shown) and may execute instructions stored in the memory. Through execution of instructions stored in the memory, the processor may control one or more other components (for example, hardware or software components) connected to the processor and may perform various data processing and computation tasks.

In addition, the processor may be composed of components configured to perform different functions and separated from each other at a hardware, software, or logic level. In this case, dedicated hardware may be used to perform each function. To this end, the processor may be implemented as or include at least one selected from among an application-specific integrated circuit (ASIC), a digital signal processor (DSP), a programmable logic device (PLD), a field programmable gate array (FPGA), a central processing unit (CPU), a microcontroller, and/or a microprocessor.

The processor may be implemented as a central processing unit (CPU) or a system on chip (SoC), and may run an operating system or application to control a plurality of hardware or software components connected to the processor, and may perform various data processing and computations. The processor may be configured to execute at least one instruction stored in the memory and store data resulting from the execution in the memory.

As used herein, the term "part" may include a unit implemented in hardware, software, or firmware, and may be used interchangeably with terms, for example, logic, logic block, component, or circuit. A "part" may be an integrally formed part or a minimal unit or portion of the part that performs one or more functions. For example, according to one embodiment, the "part" may be implemented in the form of an application-specific integrated circuit (ASIC).

Although the present invention has been described with reference to some embodiments and drawings illustrating aspects thereof, the present invention is not limited thereto. Various modifications and variations can be made by a person skilled in the art to which the present invention belongs within the scope of the of the invention as defined by the appended claims and equivalents thereto.

## Claims

1. A power maintenance apparatus comprising:
a power conversion part (200) configured for converting voltage from a battery pack (P) into operating voltage required for operation of a controller (40) adapted to manage the battery pack (P) and supplying the operating voltage to the controller (40); and
a processor (100) configured for controlling the power conversion part (200) by monitoring voltage supplied from a vehicle terminal to the controller (40).

2. The power maintenance apparatus according to claim 1, wherein the power conversion part (200) is an isolated DC/DC converter.

3. The power maintenance apparatus according to claim 1 or 2, wherein the power conversion part (200) comprises at least one selected from among a full-bridge converter, a half-bridge converter, an LLC converter, a flyback converter, and a push-pull converter.

4. The power maintenance apparatus according to any one of claims 1 to 3, wherein the power conversion part (200) is configured to convert voltage from the entire battery pack (P) into the operating voltage.

5. The power maintenance apparatus according to any one of claims 1 to 3, wherein the power conversion part (200) is configured to convert voltage from at least one battery cell in the battery pack (P) into the operating voltage.

6. The power maintenance apparatus according to any one of claims 1 to 3, wherein the power conversion part (200) converts voltage from at least one battery module (M) in the battery pack (P) into the operating voltage.

7. The power maintenance apparatus according to any one of the preceding claims, wherein the processor (100) is configured to control the power conversion part (200) based on results of comparison between the voltage supplied from the vehicle terminal to the controller (40) and a predetermined threshold voltage.

8. The power maintenance apparatus according to claim 7, wherein the threshold voltage is set to a value less than the operating voltage.

9. A power maintenance apparatus comprising:
a backup power supply part (300) charged with voltage supplied from a vehicle terminal and supplying the charged voltage to a controller (40) managing a battery pack (P) as operating voltage; and
a processor (400) configured for controlling the backup power supply part (300) by monitoring voltage supplied from the vehicle terminal to the controller (40).

10. The power maintenance apparatus according to claim 9, wherein the backup power supply part (300) is a non-isolated DC/DC converter.

11. The power maintenance apparatus according to claim 9, wherein the backup power supply part (300) is a buck-boost converter.

12. The power maintenance apparatus according to claim 11, wherein the backup power supply part (300) is operated in buck mode or boost mode depending on a magnitude of the operating voltage relative to the voltage supplied from the vehicle terminal.

13. The power maintenance apparatus according to any one of claims 9 to 12, wherein the processor (400) is configured to control the backup power supply part (300) based on results of comparison between the voltage supplied from the vehicle terminal to the controller (40) and a predetermined threshold voltage.

14. The power maintenance apparatus according to claim 13, wherein the threshold voltage is set to a value less than the operating voltage.

15. The power maintenance apparatus according to any one of claims 9 to 14, further comprising:
a power supply switching part (500) configured for selectively supplying the operating voltage from the backup power supply part (300) to the controller (40).
